(19) Europäisches Patentamt
European Patent Office
Office européen des brevets

(11) **EP 2 460 219 B1**

(12) **FASCICULE DE BREVET EUROPÉEN**

(45) Date de publication et mention de la délivrance du brevet:
**02.01.2019 Bulletin 2019/01**

(21) Numéro de dépôt: **10747927.1**

(22) Date de dépôt: **27.07.2010**

(51) Int Cl.:
*C01B 3/08* *(2006.01)*     *C25B 5/00* *(2006.01)*
*C25B 1/04* *(2006.01)*     *H01M 12/08* *(2006.01)*

(86) Numéro de dépôt international:
**PCT/FR2010/000546**

(87) Numéro de publication internationale:
**WO 2011/015723 (10.02.2011 Gazette 2011/06)**

(54) **PROCÉDÉ DE CO-GÉNÉRATION D'ÉNERGIE ÉLECTRIQUE ET D'HYDROGÈNE**

VERFAHREN FÜR DIE GEKOPPELTE ERZEUGUNG VON STROM UND WASSERSTOFFKRAFT

METHOD FOR THE COGENERATION OF ELECTRICAL AND HYDROGEN POWER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.07.2009 FR 0903737**

(43) Date de publication de la demande:
**06.06.2012 Bulletin 2012/23**

(73) Titulaire: **Ergosup**
**74100 Ville La Grand (FR)**

(72) Inventeur: **BIENVENU, Gérard**
**F-74250 Viuz-en-Salaz (FR)**

(74) Mandataire: **Talbot, Alexandre et al**
**Cabinet Hecké**
**28 Cours Jean Jaurès**
**38000 Grenoble (FR)**

(56) Documents cités:
**EP-A1- 2 048 110     US-A- 4 345 980**
**US-B2- 7 169 497**

• **J. J. Jacobsen, J. W. Moore: "Overvoltage", J. Chem. Educ. Software : Chemistry Comes Alive , vol. 3 1 septembre 1999 (1999-09-01), XP002575067, Extrait de l'Internet: URL:http://jchemed.chem.wisc.edu/JCESoft/C CA/CCA3/MAIN/VOLTAGE/PAGE1.HTM [extrait le 2010-03-24]**

## Description

### Domaine technique de l'invention

L'invention concerne un procédé de co-génération simultanée d'énergie électrique et d'hydrogène par voie totalement électrochimique.

### État de la technique

Le développement de l'exploitation des énergies propres ou le lissage de l'énergie électrique des centrales nucléaires a conduit au développement de systèmes de stockage basés sur des systèmes mécaniques tels que le pompage de l'eau et la compression de gaz ou électrochimiques comme les batteries et l'électrolyse de l'eau.

La filière la plus couramment envisagée est constituée par l'électrolyse de l'eau, le stockage de l'hydrogène et la restitution de l'énergie électrique potentiellement contenue dans l'hydrogène par des piles à combustibles.

Séduisante en théorie et sur le papier, une telle filière se heurte à des difficultés technologiques extrêmes tant au niveau des électrolyseurs qu'à celui des piles à combustibles qui constituent des merveilles technologiques mais qui sont très onéreuses comme le sont toutes les merveilles.

Si incontestablement, les piles à combustibles présentent beaucoup d'intérêt, elles seront en revanche, réservées à des applications très spécifiques compte tenu de leur coût et de leur rendement.

Si on prend les valeurs moyennes des rendements de l'électrolyse de l'eau et des piles à combustibles et en tenant compte de la compression de l'hydrogène qui est aujourd'hui le mode industriel le plus répandu de stockage de ce gaz, on voit que l'on ne restitue au mieux que 25 à 30% de l'énergie électrique initiale.

Une amélioration notable peut être apportée au niveau du stockage en fixant l'hydrogène sous la forme d'hydrures et plus particulièrement de l'hydrure de magnésium.

Sur le plan technique tous les électrochimistes savent bien qu'opérer une cellule d'électrolyse ou une pile à combustible avec deux électrodes à gaz est complexe et délicat. En outre, les polarisations aux électrodes sont élevées sauf si on utilise des catalyseurs, mais dans ce cas, les investissements sont lourdement pénalisés.

En outre, il est connu d'utiliser l'électrolyse de zinc pour produire de l'hydrogène. À titre d'exemple, on peut citer le document US-B-7169497 et l'article de J.J. Jacobsen et al. (J. Chem. Educ. Software, vol.3, 1999-09-01). En particulier, J.J. Jacobsen et al. décrivent différentes piles zinc/hydrogène en milieu acide chlorhydrique utilisant notamment des cathodes en cuivre et en nickel pour générer de l'électricité et de l'hydrogène.

Rappelons, par ailleurs, que les batteries constituent les seuls systèmes réversibles capables de stocker et de restituer l'électricité mais qu'elles sont affectées de rendements à la charge et à la décharge qui se multiplient et leur coût de production est en général élevé. Il se situe pour les batteries performantes entre 260 et plus de 1 000€/kWh contre 30 à 130€/kWh pour les batteries au plomb.

Les capacités de ces batteries sont comprises entre 30 et 100Wh/kg.

Les valeurs élevées des capacités sont celles des batteries au lithium, au nickel/zinc et au sodium/soufre. Toutes ont des capacités pratiques comprises entre 80 et 100Wh/kg, mais seule la batterie nickel/zinc est réaliste sur le plan économique pour les fortes capacités de stockage car les systèmes au lithium et au soufre présentent de nombreux inconvénients technologiques avec comme conséquence des risques élevés liés à la réactivité du lithium et du sodium et à la fragilité de l'électrolyte solide ($\beta$ alumine) avec en plus pour la batterie au sodium et au soufre un fonctionnement à l'état liquide à haute température (-300°C).

Les batteries contrairement aux piles à combustibles contiennent leur matière active ce qui les alourdit.

Ajoutons cependant que les batteries ont été pour la plupart étudiées pour des applications mobiles alors que le stockage fixe n'obéit pas aux mêmes impératifs.

Le document US 7169497 décrit un générateur d'hydrogène qui produit de l'hydrogène par électrolyse de zinc couplé à une pile à combustible. Le générateur d'hydrogène alimente la pile en combustible en hydrogène et la pile consomme cet hydrogène pour produire de l'électricité et de l'eau.

Le document US 4345980 divulgue un procédé d'électro-déposition de zinc à partir de solutions acides de sulfate de zinc.

### Objet de l'invention

L'objet de l'invention a pour but de produire simultanément de l'énergie électrique et de d'hydrogène selon un procédé remédiant aux inconvénients de l'art antérieur.

En particulier, l'objet de l'invention a pour but de proposer un procédé de co-génération simultanée d'énergie électrique et d'hydrogène propre, rentable et offrant une souplesse d'utilisation pour une production optimisée.

Selon l'invention, ce but est atteint par un procédé de co-génération selon les revendications annexées.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 représente, schématiquement, un dispositif pour la mise en oeuvre d'un procédé de co-génération simultanée d'énergie électrique et d'hydrogène selon un premier mode de réalisation particulier de l'invention.
La figure 2 représente, schématiquement, une cellule unique du dispositif selon la figure 1.
La figure 3 représente, schématiquement et en coupe, un dispositif pour la mise en oeuvre d'un procédé de co-génération simultanée d'énergie électrique et d'hydrogène selon un second mode de réalisation particulier de l'invention.

## Description de modes particuliers de réalisation.

Un procédé de co-génération simultanée d'énergie électrique et d'hydrogène par voie totalement électrochimique comporte :

- une phase de stockage d'électricité par électrolyse d'une solution d'un métal electrolysable et formation d'une pile métal electrolysable-hydrogène et,
- une phase de récupération d'électricité et génération d'hydrogène par fonctionnement de ladite pile.

La présente invention est essentiellement indiquée pour le stockage fixe de l'électricité. Elle est le résultat d'une réflexion fortuite sur les contenus énergétiques des métaux et leur facilité à produire de l'hydrogène par attaque acide ou basique, couplée à l'efficacité et à la simplicité de leur recyclage.
De tous les métaux possibles, nous avons opté de préférence pour le zinc qui est le plus courant et surtout le plus facile à recycler industriellement. D'autres métaux peuvent également être envisagés tels que le nickel ou le manganèse. L'aluminium et le magnésium ont été écartés malgré leur forte réactivité et leur contenu énergétique élevé car leur recyclage ne peut être opéré que par électrolyse en bains de sels fondus ou par métallothermie ou carbothermie à haute température. Le choix de tels métaux rend plus complexe la mise en oeuvre et augmente significativement le coût de production.
Le métal electrolysable est donc choisi parmi le zinc, le nickel et le manganèse.
Un dispositif pour la mise en oeuvre du procédé de co-génération d'énergie électrique et d'hydrogène comporte :

- une première cellule d'électrolyse munie d'au moins une première anode et une première cathode, la première cellule étant capable de former à la première cathode un métal electrolysable en dégageant de l'oxygène et,
- une seconde cellule fonctionnant en pile électrique munie d'au moins une seconde anode et une seconde cathode, la seconde cellule permettant la re-dissolution du métal à la seconde anode.

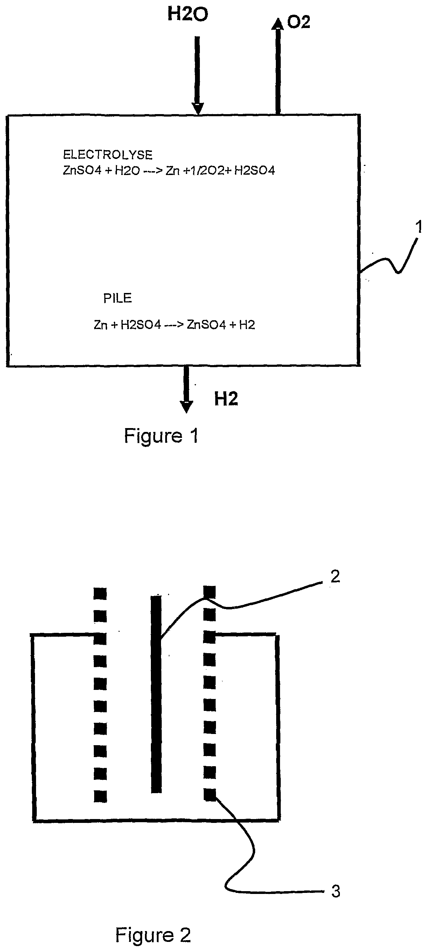

Les première et seconde cellules peuvent former une cellule unique ou deux cellules distinctes et séparées, en communication fluidique et électrique. Dans les deux cas, le dispositif est réalisé de manière à capter les gaz émis, à savoir l'oxygène en phase de stockage optimal et l'hydrogène en phase de récupération d'électricité.
Selon un premier mode de réalisation particulier représenté à la figure 1, les première et seconde cellules sont constituées par une cellule unique 1. Le premier mode de réalisation est basé sur un dispositif d'électrolyse du zinc ayant un fonctionnement réversible en pile électrique.
La première cathode et la seconde anode forment une seule et même électrode qui joue alternativement le rôle de cathode lors de la phase de stockage et d'anode lors de la phase de récupération.
De même, la première anode et la seconde cathode forment une seule et même électrode qui joue alternativement le rôle d'anode lors de la phase de stockage et de cathode lors de la phase de récupération.
La première cellule d'électrolyse est ainsi, avantageusement, utilisée également comme pile.
Le métal electrolysable est, avantageusement, du zinc.
Le procédé de co-génération simultanée d'énergie électrique et d'hydrogène par voie totalement électrochimique comporte une première phase de formation d'une pile zinc-hydrogène par électrolyse d'une solution de zinc. La première phase permet le stockage de l'électricité sous forme d'un dépôt de zinc sur la première cathode.
La solution de zinc est une solution électrolytique constituée par une solution pure de sulfate de zinc titrant 150 à 200g/l de zinc à pH 4,5, pour avoir un rapport p des concentrations en acide et en zinc aussi bas que possible au début de l'électrolyse. Le rapport p est égal à l'équation suivante :

$$\rho = \frac{[CH_2SO_4]}{[ZnSO_4]}$$

La réaction d'électrolyse (1) représentée ci-après a lieu dans la cellule unique 1 :

$$ZnSO_4 + H_2O \rightarrow Zn + 1/2O_2 + H_2SO_4 \qquad (1)$$

Comme représenté à la figure 1, la cellule unique 1 comporte au moins deux électrodes et est fermée hermétiquement. La cellule unique 1 comporte également une entrée pour l'alimentation en eau et deux sorties ; une première sortie pour l'oxygène et une seconde sortie pour l'hydrogène.

Dans ce dispositif, la cellule unique 1 est totalement adaptée au stockage de l'électricité. Par rapport aux cellules industrielles de production de zinc bien connues, les différences sont nombreuses et essentielles à savoir :

**Matériaux d'électrodes**

Dans la cellule unique 1, on utilise au moins une électrode en cuivre et/ou au moins une électrode en métal inattaquable par l'oxygène en milieu acide.

Lors de la phase de stockage, le plomb de l'anode est remplacé par une anode en métal inattaquable par l'oxygène en milieu acide. Nous avons privilégié le titane nitruré en surface ou mieux une électrode type « sandwich » avec une âme en cuivre et une enveloppe en titane nitruré. Une électrode en cuivre chromé en surface peut, avantageusement, être utilisée avec ou sans nitruration superficielle du chrome. Ainsi, lors de la phase de stockage du procédé, on emploie avantageusement une anode en titane nitruré, en cuivre chromé ou en cuivre chromé et nitruré.

L'aluminium qui constitue classiquement la cathode dans l'électrolyse du zinc du fait de la non-adhérence du zinc sur l'aluminium, est remplacé par une cathode en cuivre. En effet, on n'a pas à décoller les dépôts de zinc dans le procédé selon l'invention.

Avec de telles électrodes, les pertes ohmiques sont fortement diminuées.

On peut, également, activer l'électrode, en particulier l'anode, en y déposant des traces de métaux dépolarisants tels que le platine.

Les distances inter-électrodes qui sont de 3 à 3.5 cm dans la production du zinc sont ramenées ici à 4 à 6 mm, ce qui réduit considérablement les pertes ohmiques.

Rappelons que dans une cellule d'électrolyse industrielle du zinc pour une densité de courant de 520A/m$^2$, on a un rendement de 60% environ.

En diminuant la densité du courant à 400A/m$^2$ le rendement des cellules industrielles passe à 64% et dans la réalisation selon l'invention, avec une distance inter-électrode de 5 mm et une densité de courant de 400A/m$^2$, le rendement atteint 83% et même 90% pour une densité de courant de 300A/m$^2$.

À titre d'exemple représenté à la figure 2, la cellule unique 1 a une électrode en cuivre et deux électrodes en titane nitruré lui faisant face. Lors de la phase de stockage, l'électrode en cuivre forme la première cathode 2 ayant une surface recto-verso de 2 dm$^2$ et les électrodes en titane nitruré forment deux premières anodes 3.

La première cathode 2 de dimensions en longueur et largeur, respectivement, de 1dm x 1dm est alimentée pendant 8 heures à l'aide d'une alimentation stabilisée.

Lors de la phase de stockage, une pile zinc-hydrogène est formée. L'électrolyse forme un dépôt du zinc à la première cathode 2 de la pile zinc-hydrogène.

Les résultats de l'électrolyse sont donnés dans le tableau (1) suivant.

**TABLEAU 1**

| ELECTROLYSE | |
|---|---|
| Durée (heures) | 8 |
| Surf cathodique (dm2) | 2 |
| densité de courant(A/dm2) | 4 |
| Quantité de courant (Cb) | 230400 |
| Quantité deZinc calculée (g) | 78 |
| Quantité deZinc obtenu (g) | 77,2 |
| $\rho_f$ | 0,99 |
| Tension moyenne(volts) | 2,57 |
| E (J) | 592128 |

(suite)

| ELECTROLYSE | |
|---|---|
| E théorique(J) | 470016 |
| $\rho_e$ | 0,79 |
| **Quantité d'électrolyte (l)** | 2 |
| **Quantité de Zn initiale(g)** | 300 |
| **Quantité de Zn finale(g)** | 223 |
| H2SO4 (g/l) | 60 |

Dans le tableau 1, $\rho_f$ représente le rendement faradique et $\rho_e$ le rendement énergétique.

Le tableau (2) représenté ci-dessous donne le bilan d'une électrolyse classique comparé à celui de l'électrolyse selon le mode de réalisation particulier de l'invention.

**TABLEAU 2**

| | COMPARAISON DES PERFORMANCES | | | |
|---|---|---|---|---|
| | Electrolyse classique | | Electrolyse de stockage | |
| **i(A/m2)** | **400** | **526** | **400** | **600** |
| **W (Kwh/t)** | 3200 | 3420 | 2024 | 2253 |
| **E° (Volts)** | 2,04 | 2,04 | 2,04 | 2,04 |
| **E (Volts)** | 3,2 | 3,47 | 2,47 | 2,75 |
| **R (ohms)** | 0,0014 | 0,0014 | 0,0002 | 0,0002 |
| **Ri (Volts)** | 0,5703 | 0,7500 | 0,08 | 0,12 |
| $\rho$ **(Volts)** | 0,59 | 0,86 | 0,35 | 0,59 |
| $\rho_e$ | 0,64 | 0,59 | 0,83 | 0,74 |

La première phase de stockage est suivie par une seconde phase de récupération d'électricité et génération d'hydrogène. La pile fonctionne dès l'arrêt de l'électrolyse pour produire de l'électricité et de l'hydrogène.

Dans la phase de récupération de l'électricité et de la génération de l'hydrogène, la réaction (2) suivante a lieu :

$$Zn + H_2SO_4 \rightarrow ZnSO_4 + H_2 \qquad (2)$$

Le dépôt de zinc formé lors de la phase de stockage est consommé lors de la phase de récupération d'électricité, pour régénérer la solution de sulfate de zinc nécessaire à la phase de stockage.

Une libération d'enthalpie libre de -217 000 joules se produit à 40°C, générant une différence de potentiel de 1.12 volts sous un courant nul.

Ainsi, à l'issue de l'électrolyse, on arrête l'alimentation et on connecte les pôles de la cellule unique 1 à une résistance de 0.2Ω. On débite ainsi en moyenne 3.55A pendant 8 heures sous une tension qui varie entre 1.05 volt et 0.6 volt, pour une valeur moyenne de 0.78 volt.

Le tableau (3) représenté ci-après répertorie les résultats de la phase de récupération d'électricité et génération d'hydrogène.

**TABLEAU 3**

| RESTITUTION DE L'ENERGIE | |
|---|---|
| Durée (heures) | 9 |
| Surf cathodique (dm2) | 2 |
| densité de courant moyenne(A/dm2) | 3,55 |
| Quantité de courant (Cb) | 230040 |
| Quantité de Zinc dissous (g) | 76,4 |
| $\rho_f$ | 0,98 |
| Tension moyenne(volts) | 0,78 |
| E (J) | 179431 |
| E théorique(J) | 254545 |

(suite)

| RESTITUTION DE L'ENERGIE | |
|---|---|
| $\rho_e$ | 0,7 |
| Quantité d'électrolyte (l) | 2 |
| Quantité de Zn initiale(g) | 223 |
| Quantité de Zn finale(g) | 299,4 |
| H2SO4 (g/l) | 2,8 |
| Quantité d'hydrogène (litres à 25°C) | 29 |

Le bilan global s'établit donc comme suit :

- Energie totale consommée   592 128 joules
- Energie totale récupérée   179 431 joules
- Production d'hydrogène   2.33 grammes

Soit une consommation de 412 696 joules pour 2.33g ou 177 123 joules/g exprimés en kWh/kg cela revient à 49.2.

Comme il faut théoriquement 31.53 kWh pour produire 1kg d'hydrogène, on a eu un rendement global de 64%.

La valeur de ce rendement est tout à fait comparable voire supérieure à celle des électrolyseurs existants. Toutefois, il faut remarquer que ce résultat est obtenu en vue de stocker une énergie électrique d'heures creuses et que cette énergie est restituée à raison de 30% sous forme d'énergie électrique accompagnée de la production de 1kg d'hydrogène pour 70kWh électrique stockés.

Sachant que la combustion d'un kilogramme d'hydrogène dans une turbine à gaz dégage 34.7kWh thermiques et que le rendement d'une telle turbine atteint au moins 40%, on peut estimer qu'une telle filière est capable de restituer 50% de l'énergie électrique stockée.

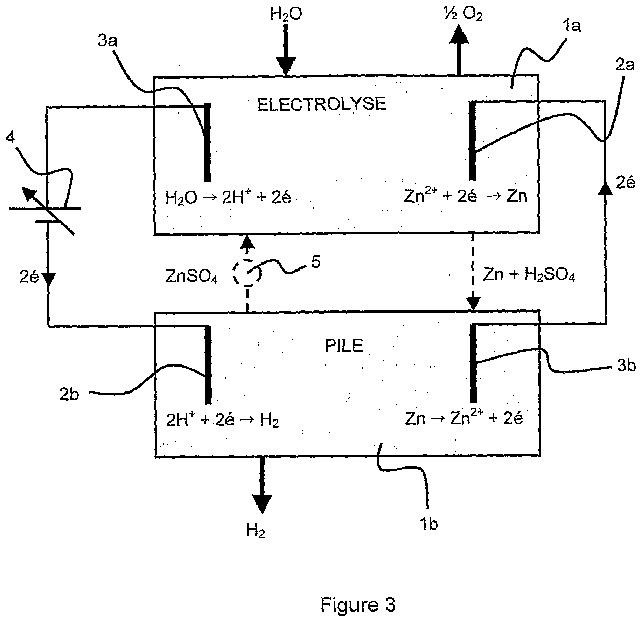

Selon un second mode de réalisation particulier représenté à la figure 3, la phase de stockage et la phase de récupération d'électricité et de génération d'hydrogène sont réalisées simultanément, pour une production continue d'hydrogène. On réalise l'électrolyse dans une première cellule 1a d'électrolyse et on opère la co-génération dans une seconde cellule 1b différente de la première cellule 1a d'électrolyse.

Comme représenté à la figure 3, le dispositif est identique au premier mode de réalisation particulier, à l'exception du fait que le dispositif comporte une première cellule d'électrolyse 1a et une seconde cellule 1b, distinctes et séparées, en communication fluidique et électrique.

Le dispositif fonctionne en continu pour une production continue d'hydrogène.

La première cellule 1a est munie d'une première cathode 2a et d'une première anode 3a.

La seconde cellule 1b est munie d'une seconde cathode 2b et d'une seconde anode 3b.

Chacune des première et seconde cathodes, respectivement 2a et 2b, ainsi que des première et seconde anodes, respectivement 3a et 3b, fonctionne sur une seule face, l'autre étant isolée.

Les première et seconde cellules, respectivement 1a et 1b, sont connectées électriquement à une alimentation stabilisée 4.

L'électrolyte circule de la première cellule 1a à la seconde cellule 1b grâce à la gravitation et de la seconde cellule 1b à la première cellule 1a grâce à une pompe à membrane 5 (flèches en pointillés à la figure 3).

À titre d'exemple, les cathodes, 2a et 2b, et les anodes, 3a et 3b, ont une surface active de 1dm$^2$.

Les première et seconde cathodes, 2a et 2b, sont en cuivre et les première et seconde anodes, 3a et 3b, en titane nitruré. Pour un temps de fonctionnement de 2 heures, la densité de courant obtenue s'élève à 4 A/dm$^2$ avec une concentration en zinc de 1,45g/l à un pH de 4.

La tension moyenne mesurée est de 1,7V aux bornes de l'alimentation 4.

9,68g de zinc provenant de la première cellule 1a ont été dissous dans la seconde cellule 1b. On recueille également 3,6 litres d'hydrogène et 1,78 litres d'oxygène.

La consommation énergétique est de 13,6Wh correspondant à 47Wh/kg de $H_2$.

Le grand avantage du procédé selon l'invention réside dans son économie et la simplicité de la technologie.

En effet, la technologie des cellules d'électrolyse du zinc classique ou adaptée à cette application, permet d'obtenir des investissements sans commune mesure avec ceux requis pour l'électrolyse de l'eau.

Le procédé selon l'invention est également remarquable en ce qu'il permet de stocker de l'énergie électrique disponible à un temps T, par exemple, lors des heures creuses et de restituer l'énergie électricité stockée avec un rendement élevé, par exemple lors des heures pleines.

**Revendications**

1. Procédé de co-génération simultanée d'énergie électrique et d'hydrogène par voie totalement électrochimique, **caractérisé en ce qu'**il comporte les étapes suivantes :

   - fournir une solution d'un métal électrolysable choisi parmi le zinc, le nickel et le manganèse, une première électrode et une seconde électrode,
   - électrolyser la solution de manière à :

     - déposer le métal électrolysable sur la première électrode,
     - générer des ions hydrogène en solution à la seconde électrode,
     - et former une pile métal électrolysable-hydrogène.

   - faire fonctionner la pile métal électrolysable-hydrogène de manière à simultanément :

     - produire de l'hydrogène sous forme gazeuse à partir des ions hydrogène en solution à la seconde électrode,
     - oxyder le métal électrolysable de la première électrode,
     - générer de l'électricité entre les première et deuxième électrodes,

   **caractérisé en ce que** l'on utilise une cellule d'électrolyse (1) comme pile.

2. Procédé selon la revendication 1, **caractérisé en ce que** la solution de métal électrolysable est une solution acide.

3. Procédé selon l'une quelconque des revendications 1 à 2, **caractérisé en ce que** le procédé est configuré de manière à capter l'hydrogène sous forme gazeuse.

4. Procédé selon l'une quelconque des revendications 1 à 3, **caractérisé en ce que** la cellule d'électrolyse (1) est hermétiquement fermée.

5. Procédé selon l'une quelconque des revendications 1 à 4, **caractérisé en ce que** la cellule d'électrolyse (1) a un fonctionnement réversible en pile électrique.

6. Procédé selon l'une quelconque des revendications 1 à 5, **caractérisé en ce qu'**on utilise au moins une électrode (2, 2a, 2b) en cuivre.

7. Procédé selon l'une quelconque des revendications 1 à 6, **caractérisé en ce qu'**on utilise au moins une électrode (3, 3a, 3b) en métal inattaquable par l'oxygène en milieu acide.

8. Procédé selon l'une quelconque des revendications 1 à 6, **caractérisé par** l'emploi lors de la phase de stockage dudit procédé, d'une anode (3, 3a, 3b) en titane nitruré.

9. Procédé selon l'une quelconque des revendications 1 à 6, **caractérisé par** l'emploi lors de la phase de stockage dudit procédé, d'une anode (3, 3a, 3b) en cuivre chromé.

10. Procédé selon l'une quelconque des revendications 1 à 6, **caractérisé par** l'emploi lors de la phase de stockage dudit procédé, d'une anode (3, 3a, 3b) en cuivre chromé et nitruré.

11. Procédé selon l'une quelconque des revendications 1 à 6, **caractérisé par le fait que** l'on active l'électrode (3, 3a, 3b) en y déposant des traces de métaux dépolarisants tels que le platine.

**Patentansprüche**

1. Verfahren zur gleichzeitigen Erzeugung von elektrischer Energie und Wasserstoff auf komplett elektrochemischem Weg, **dadurch gekennzeichnet, dass** es folgende Schritte umfasst:

   - Zurverfügungstellung einer Lösung eines elektrolysierbaren Metalls, ausgewählt aus Zink, Nickel und Mangan, einer ersten Elektrode und einer zweiten Elektrode,

- Elektrolyse der Lösung, damit:

- sich das elektrolysierbare Metall an der ersten Elektrode niederschlägt,
- Erzeugung von Wasserstoffionen in Lösung an der zweiten Elektrode,
- und Herstellung einer Batterie aus elektrolysierbarem Metall und Wasserstoff,

- Betreiben der Batterie aus elektrolysierbarem Metall und Wasserstoff, um gleichzeitig:

- gasförmigen Wasserstoff aus den Wasserstoffionen in Lösung an der zweiten Elektrode zu gewinnen,
- das elektrolysierbare Metall der ersten Elektrode zu oxidieren,
- zwischen erster und zweiter Elektrode Strom zu erzeugen,

**dadurch gekennzeichnet, dass** eine Elektrolysezelle (1) als Batterie verwendet wird.

2. Verfahren nach Anspruch 1, **dadurch gekennzeichnet, dass** die Lösung aus elektrolysierbarem Metall eine Säurelösung ist.

3. Verfahren nach einem der Ansprüche 1 bis 2, **dadurch gekennzeichnet, dass** das Verfahren so vorgesehen ist, dass es den Wasserstoff in Form von Gas auffängt.

4. Verfahren nach einem der Ansprüche 1 bis 3, **dadurch gekennzeichnet, dass** die Elektrolysezelle (1) hermetisch verschlossen ist.

5. Verfahren nach einem der Ansprüche 1 bis 4, **dadurch gekennzeichnet, dass** die Elektrolysezelle (1) auch reversibel als Elektrobatterie betrieben werden kann.

6. Verfahren nach einem der Ansprüche 1 bis 5, **dadurch gekennzeichnet, dass** mindestens eine Kupferelektrode (2, 2a, 2b) verwendet wird.

7. Verfahren nach einem der Ansprüche 1 bis 6, **dadurch gekennzeichnet, dass** mindestens eine Elektrode (3, 3a, 3b) aus einem Metall eingesetzt wird, das unempfindlich für Sauerstoff in saurem Milieu ist.

8. Verfahren nach einem der Ansprüche 1 bis 6, **gekennzeichnet durch** die Verwendung einer Anode (3, 3a, 3b) aus nitriertem Titan beim Speicherschritt des genannten Verfahrens.

9. Verfahren nach einem der Ansprüche 1 bis 6, **gekennzeichnet durch** die Verwendung einer Anode (3, 3a, 3b) aus verchromtem Kupfer beim Speicherschritt des genannten Verfahrens.

10. Verfahren nach einem der Ansprüche 1 bis 6, **gekennzeichnet durch** die Verwendung einer Anode (3, 3a, 3b) aus verchromtem und nitriertem Kupfer beim Speicherschritt des genannten Verfahrens.

11. Verfahren nach einem der Ansprüche 1 bis 6, **dadurch gekennzeichnet, dass** die Elektrode (3, 3a, 3b) dadurch aktiviert wird, dass darauf Spuren depolarisierender Metalle wie Platin aufgebracht werden.

**Claims**

1. A method for simultaneous co-generation of electric energy and hydrogen by totally electrochemical means, **characterized in that** it comprises the following steps:

- providing a solution of an electrolysable metal chosen from zinc, nickel and manganese, a first electrode and a second electrode,
- electrolyzing the solution so as to :

○ deposit the electrolysable metal on the first electrode,
○ generate hydrogen ions in the solution at the second electrode,
○ and form hydrogen - electrolysable metal battery cell,

- operating the hydrogen - electrolysable metal battery cell so as to simultaneously:

  ◦ producing hydrogen in gaseous form from hydrogen ions in the solution at the second electrode,
  ◦ oxydizing the electrolysable metal at the first electrode,
  ◦ generating electricity between the first and second electrodes

  **characterized in that** an electrolysis cell (1) is used as battery cell.

2.  The method according to claim 1, **characterized by** the solution of an electrolysable metal is an acid solution.

3.  The method according to one of claims 1 and 2, **characterized in that** the method is configured to capture hydrogen in gaseous form.

4.  The method according to any one of claims 1 to 3, **characterized by** the electrolysis cell (1) is hermetically sealed.

5.  The method according to one of claims 1 and 4, **characterized in that** the electrolysis cell (1) has a reversible operation as an electric battery cell.

6.  The method according to any one of claims 1 to 5, **characterized in that** at least one copper electrode (2, 2a, 2b) is used.

7.  The method according to any one of claims 1 to 6, **characterized in that** at least one electrode (3, 3a, 3b) is used made from metal unable to be attacked by oxygen in an acid environment.

8.  The method according to any one of claims 1 to 6, **characterized by** the use of a titanium nitride anode (3, 3a, 3b) in the storage phase of said method.

9.  The method according to any one of claims 1 to 6, **characterized by** the use of a chromed copper anode (3, 3a, 3b) in the storage phase of said method.

10. The method according to any one of claims 1 to 6, **characterized by** the use of a chromed and nitrided copper anode (3, 3a, 3b) in the storage phase of said method.

11. The method according to any one of claims 1 to 6, **characterized by** the fact that the electrode (3, 3a, 3b) is activated by depositing traces of depolarizing metals such as platinum thereon.

**H2O**       ↑**O2**

ELECTROLYSE
ZnSO4 + H2O ---> Zn +1/2O2+ H2SO4

PILE

Zn + H2SO4 ---> ZnSO4 + H2

1

**H2**

Figure 1

2

3

Figure 2

$H_2O$

½ $O_2$

3a

1a

2a

ELECTROLYSE

4

$H_2O \rightarrow 2H^+ + 2é$

$Zn^{2+} + 2é \rightarrow Zn$

2é

2é

$ZnSO_4$

5

$Zn + H_2SO_4$

2b

PILE

3b

$2H^+ + 2é \rightarrow H_2$

$Zn \rightarrow Zn^{2+} + 2é$

$H_2$

1b

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7169497 B

- US 4345980 A

**Littérature non-brevet citée dans la description**

- **J.J. JACOBSEN et al.** *J. Chem. Educ. Software,* 01 Septembre 1999, vol. 3